# EUROPEAN PATENT APPLICATION

(11) **EP 3 048 148 A1**
(43) Date of publication of application: **27.07.2016**
(21) Application number: 14859444.3
(22) Date of filing: 28.10.2014
(51) Int. Cl.: C09J 7/02, B32B 27/00, B32B 27/32, C09J 153/00, C09J 153/02

(54) **ADHESIVE SHEET FOR TIRE AND METHOD FOR MANUFACTURING ADHESIVE SHEET FOR TIRE**

(30) Priority: 11.11.2013 JP 2013232661
(71) Applicant: LINTEC Corporation, Tokyo 173-0001 (JP)
(72) Inventor: TANAKA Yoshikazu, Tokyo 173-0001 (JP); TODA Kosuke, Tokyo 173-0001 (JP)
(74) Representative: MERH-IP Matias Erny Reichl Hoffmann Patentanwälte PartG mbB
(86) International application number: PCT/JP2014/078563
(87) International publication number: WO 2015/068610

(57) **Abstract**

Provided are an adhesive sheet for a tire, which has a small ratio of dimensional change with the passage of storage time or the like even in a case in which a polyolefin-based resin film is used as a substrate; and a method for manufacturing an adhesive sheet for a tire.

Disclosed is an adhesive sheet for a tire, the adhesive sheet including a substrate and an adhesive layer, and the adhesive layer containing a hot melt type adhesive composition, characterized in that the ratio of dimensional change in the MD direction of the adhesive sheet for a tire measured for 7 days at 60°C according to JIS K 7133 has a value of below ±0.6%, the substrate is a polyolefin-based resin film, the hot melt type adhesive composition includes the following components (A) to (C):
(A) a block copolymer: 15% to 40% by weight;
(B) plural tackifiers having different softening points: 30% to 70% by weight; and
(C) a liquid hydrocarbon-based plasticizer: 10% to 50% by weight, and
the number average molecular weight of the (C) liquid hydrocarbon-based plasticizer has a value within the range of 10,000 to 60,000.

## Description

### TECHNICAL FIELD

The present invention relates to an adhesive sheet for a tire and a method for manufacturing an adhesive sheet for a tire. More particularly, the invention relates to an adhesive sheet for a tire, in which the ratio of dimensional change may be suppressed even in the case of using an olefin-based film as a substrate, and to a method for manufacturing an adhesive sheet for a tire.

### BACKGROUND ART

Pressure-sensitive adhesive sheets for a tire called tire labels or the like have been hitherto known. These are adhesive sheets including a tire display section for the manufacturer's name or the brand name of the tire, the size (width, aspect ratio, and rim ratio), precautions for use, and the like in order to deliver the tire information to customers or to arouse customers' desire to purchase, and are used by being affixed to the circumference including the contact surface (tread surface) of a tire. That is, generally, such an adhesive sheet for a tire uses a film including a vapor deposited aluminum layer as a support, and the adhesive sheet is configured such that an adhesive layer containing a rubber-based resin or an acrylic acid alkyl ester resin as a main component is laminated on such a support.

Thus, for example, an adhesive sheet for a tire has been disclosed, the adhesive sheet including a substrate and an adhesive layer which contains a hot melt type adhesive composition and has predetermined adhesion characteristics (see, for example, Patent Document 1).

That is, Patent Document 1 discloses an adhesive sheet for a tire, which contains a hot melt type adhesive composition that is configured at predetermined mixing proportions, the adhesive sheet particularly containing two or more kinds of tackifiers having different softening points as tackifiers.

Furthermore, for example, an adhesive sheet for a tire has been disclosed, the adhesive sheet including a substrate and an adhesive layer which contains a hot melt type adhesive composition and has predetermined adhesion characteristics (see, for example, Patent Document 2).

That is, Patent Document 2 discloses an adhesive sheet for a tire, which contains a hot melt type adhesive composition that is configured at predetermined mixing proportions, the adhesive sheet particularly containing at least a predetermined polymerized rosin ester and another predetermined tackifying resin as tackifiers.

On the other hand, generally, as a substrate of an adhesive sheet for a tire, a polyester-based resin film, particularly a polyethylene terephthalate resin film, is suitably used.

However, since a polyethylene terephthalate resin film is relatively expensive, there has been a demand for an adhesive sheet for a tire using a polyolefin-based resin film, which is more inexpensive, as the substrate.

Here, in a case in which a polyolefin-based resin film is used as the substrate, there has been a problem that significant dimensional changes occur due to heating at the time of production, or with the passage of storage time or the passage of affixing time, and wrinkles occur in the adhesive sheet over time.

Thus, an adhesive composition and an adhesive sheet, which are intended to use a polyolefin-based resin sheet as a substitute for the polyester film that is generally used for the substrate, have been disclosed (see, for example,

Patent Document 3).

That is, Patent Document 3 discloses an adhesive composition including (A) a rubber-like hydrocarbon-based elastomer, and (B) a liquid hydrocarbon-based plasticizer having a predetermined number average molecular weight.

### CITATION LIST

### PATENT DOCUMENT

Patent Document 1: WO 2005/037945 (Claims)
Patent Document 2: WO 2006/070529 (Claims)
Patent Document 3: JP 2009-191106 A (Claims, specification)

### SUMMARY OF THE INVENTION

### PROBLEMS TO BE SOLVED BY THE INVENTION

However, although the adhesive sheets for tires described in Patent Document 1 and Patent Document 2 respectively exhibit satisfactory tire adhesion characteristics from high temperatures to low temperatures, these adhesive sheets substantially use polyester-based resin sheets as the substrate, and no specific investigation has been conducted on the case of using a polyolefin-based resin sheet.

That is, in both patent documents, no specific investigations have been conducted on the problem that as compared to polyester-based resin sheets, when polyolefin-based resin sheets are used as the substrate, significant dimensional changes occur in the adhesive sheets, and wrinkles occur with the passage of storage time.

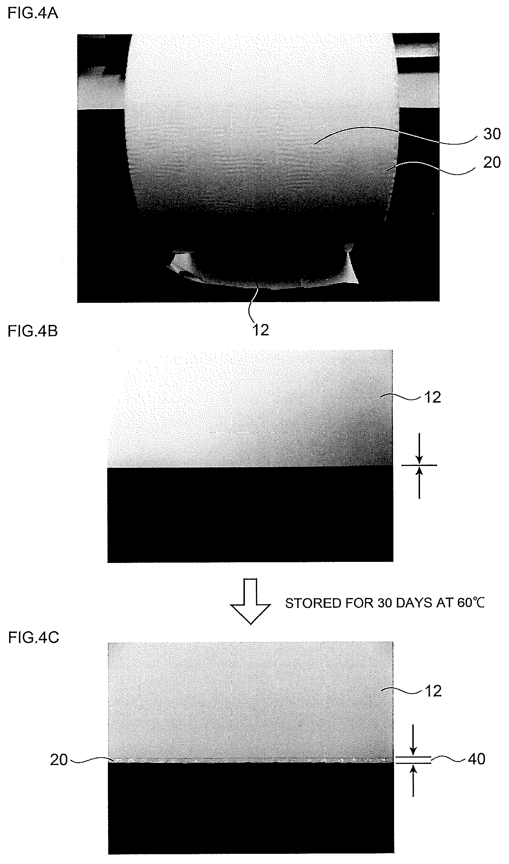

More specifically, in a case in which an adhesive sheet for a tire obtained by laminating a conventional adhesive on a polypropylene resin sheet, was stored in a roll form for 30 days in an environment at 60°C, wrinkles 30 occurred in the adhesive sheet 20, as illustrated in FIG. 4A. Furthermore, as illustrated in FIG. 4B and 4C, the dimensions of the release sheet 12 and the adhesive sheet 20 coincided before storage; however, after storage for 30 days, the dimension of the adhesive sheet 20 changed significantly and protruded from the release sheet, and a dimensional change 40 occurred.

Furthermore, the adhesive composition and the adhesive sheet described in Patent Document 3 are intended to be used mainly for displays, indicator applications or decorative applications, and no specific investigation has been conducted in connection with the tackifier. In a case in which the adhesive sheet is used as an adhesive sheet for a tire, there is a problem that satisfactory adhesion characteristics may not be obtained in a wide range from high temperature to low temperature.

Thus, the present inventors have conducted a thorough investigation, and as a result, the present inventors found that when the ratio of dimensional change in the MD direction or the like of an adhesive sheet for a predetermined time period is adjusted to a predetermined range, and when incorporation of an adhesive or the like is considered, even in a case in which a polyolefin resin sheet is used as a substrate, the occurrence of wrinkles with the passage of storage time or the like may be efficiently suppressed.

That is, it is an object of the invention to provide an adhesive sheet for a tire, with which the ratio of dimensional change of the adhesive sheet is small even in the case of using a polyolefin-based resin as a substrate, wrinkles do not occur with the passage of storage time or the like, and satisfactory adhesion characteristics are obtained over a wide range from low temperature to high temperature, and a method for manufacturing an adhesive sheet for a tire.

### MEANS FOR SOLVING THE PROBLEMS

According to an aspect of the invention, there is provided an adhesive sheet for a tire, the adhesive sheet including a substrate and an adhesive layer, and the adhesive layer containing a hot melt type adhesive composition, characterized in that the ratio of dimensional change in the MD direction of the adhesive sheet for a tire measured for 7 days at 60°C according to JIS K 7133 (can also be measured according to ISO 11501 1995; hereinafter, the same) is below ±0.6%, the substrate is a polyolefin-based resin film, the hot melt type adhesive composition includes the following components (A) to (C):
(A) a block copolymer: 15% to 40% by weight;
(B) plural tackifiers having different softening points: 30% to 70% by weight; and
(C) a liquid hydrocarbon-based plasticizer: 10% to 50% by weight, and
the number average molecular weight of the (C) liquid hydrocarbon-based plasticizer has a value within the range of 10,000 to 60,000. Thus, the problems described above may be solved.

That is, when the ratio of dimensional change in the MD direction of the adhesive sheet for a tire is defined, even in a case in which a polyolefin-based resin film is used as a substrate, the influence of the ratio of dimensional change of the adhesive sheet based on the dimensional change of the substrate with the passage of storage time or the like may be effectively defined.

Furthermore, when the predetermined liquid hydrocarbon-based plasticizer is used, even in the case of using a polyolefin-based resin film as the substrate, it is difficult for the plasticizer to migrate to the substrate. Therefore, the dimensional change of the substrate with the passage of storage time or the like is not accelerated, and consequently, the occurrence of wrinkles in the adhesive sheet may be effectively prevented.

Furthermore, when a block copolymer, plural tackifiers having different softening points, and a predetermined plasticizer are used at predetermined mixing proportions, the adjustment of the adhesive strength or the cohesive strength of the hot melt type adhesive composition to the tire may be further easily achieved over a wide range from high temperature to low temperature.

Meanwhile, on the occasion of measuring the ratio of dimensional change in the MD direction for 7 days at 60°C, the method described in Example 1 may be employed.

Furthermore, on the occasion of configuring the adhesive sheet for a tire of the invention, it is preferable that the ratio of dimensional change in the TD direction of the adhesive sheet for a tire measured for 7 days at 60°C according to JIS K 7133, has a value within the range of ±1.0% or less.

When such a configuration is employed, the influence of the ratio of dimensional change of the adhesive sheet based on the dimensional change of the substrate sheet may be more effectively defined.

Furthermore, on the occasion of configuring the adhesive sheet for a tire of the invention, it is preferable that the (B) plural tackifiers having different softening points include a terpene-based resin that is liquid at room temperature, and the amount of the relevant tackifier that is liquid at room temperature has a value within the range of 0.5% to 20% by weight relative to the total amount of the plural tackifiers.

That is, when a terpene-based resin that is liquid at room temperature is used at the predetermined proportion, even in the case of using a polyolefin-based resin film as the substrate, the adhesive strength between the adhesive sheet and the tire may be increased with a small amount of the tackifiers, without affecting the ratio of dimensional change of the substrate.

Furthermore, on the occasion of configuring the adhesive sheet for a tire of the invention, it is preferable that the (B) plural tackifiers having different softening points constitute a combination of at least one selected from an aliphatic petroleum resin, an aromatic petroleum resin and a mixture thereof, a polymerized rosin ester, and a terpene-based resin that is liquid at room temperature.

That is, when the predetermined combination of tackifiers is used, the aliphatic petroleum resin and the like are highly compatible selectively with the resin portion in the block copolymer, the polymerized rosin ester is highly compatible selectively with the rubber portion, and the terpene-based resin has high affinity to tires. Therefore, the adjustment of the adhesive strength or the cohesive strength of the hot melt type adhesive composition to the tire may be further easily achieved.

Furthermore, on the occasion of configuring the adhesive sheet for a tire of the invention, it is preferable that the (C) liquid hydrocarbon-based plasticizer is an isoprene-based plasticizer, and the glass transition point of the relevant isoprene-based plasticizer has a value within the range of -50°C to -100°C.

That is, when an isoprene-based plasticizer is used as the liquid hydrocarbon-based plasticizer, satisfactory plasticity may be imparted to the block copolymer, and in a case in which a polyolefin-based resin film is used as the substrate, it is relatively difficult for the plasticizer to migrate to the substrate after the passage of storage time or the like. Therefore, the ratio of dimensional change of the adhesive sheet for a tire may be suppressed.

Furthermore, by defining the glass transition point of the isoprene-based plasticizer, the plasticity for the block copolymer may be further enhanced.

Furthermore, on the occasion of configuring the adhesive sheet for a tire of the invention, it is preferable that the (A) block copolymer is a mixture of a styrene-isoprene-styrene block copolymer (SIS) as an ABA-type block copolymer and a styrene-isoprene block copolymer (SI) as an AB-type block copolymer, and the amount of the relevant AB-type block copolymer is adjusted to a value of 30% to 80% by weight relative to the total amount of the block copolymer.

That is, when the predetermined ABA-type block copolymer and AB-type block copolymer are incorporated at the predetermined proportions, the block copolymers may respectively exhibit sufficient retentivity, irrespective of the season being summer or winter, and the occurrence of lifting or peeling after being affixed to a tire may be prevented.

Furthermore, on the occasion of configuring the adhesive sheet for a tire of the invention, it is preferable that the content of the polystyrene region in 100% by weight of the block copolymers is adjusted to a value of 20% by weight or less.

That is, when the content of the polystyrene region in the block copolymers is optimized, the adjustment of the adhesive strength or cohesive strength of the hot melt type adhesive composition may be further easily achieved.

Furthermore, on the occasion of configuring the adhesive sheet for a tire of the invention, it is preferable that the substrate is a white polypropylene film containing titanium oxide.

When such a configuration is employed, the adhesive sheet for a tire may be made to acquire superior conformity, and the adhesive sheet for a tire may be manufactured at lower cost.

Furthermore, on the occasion of configuring the adhesive sheet for a tire of the invention, it is preferable that the adhesive sheet includes a metal layer between the substrate and the adhesive layer.

When such a configuration is employed, the ratio of dimensional change of the adhesive sheet may be further suppressed.

Furthermore, the metal layer may block the migration of the constituent components of the tire through the adhesive layer, and may thereby effectively prevent blackening at the surface of the substrate.

Furthermore, the metal layer may enhance the designability of the adhesive sheet for a tire.

Furthermore, according to another aspect of the invention, there is provided a method for manufacturing an adhesive sheet for a tire including a substrate and an adhesive layer, the method including the following steps (1) to (3):
(1) a step of preparing a hot melt type adhesive composition including the following components (A) to (C):
   (A) a block copolymer: 15% to 40% by weight;
   (B) plural tackifiers having different softening points: 30% to 70% by weight; and
   (C) a liquid hydrocarbon-based plasticizer having a number average molecular weight value within the range of 10,000 to 60,000: 10% to 50% by weight,
(2) a step of preparing a polyolefin-based resin film as a substrate; and
(3) a step of applying the hot melt type adhesive composition on the substrate, and thereby forming an adhesive sheet for a tire, for which the ratio of dimensional change in the MD direction measured for 7 days at 60°C according to JIS K 7133 has a value of below ±0.6%.

When the method is carried out as such, even in the case of using a polyolefin-based resin film as the substrate, an adhesive sheet for a tire having a small ratio of dimensional change may be efficiently produced.

### BRIEF DESCRIPTION OF THE DRAWINGS

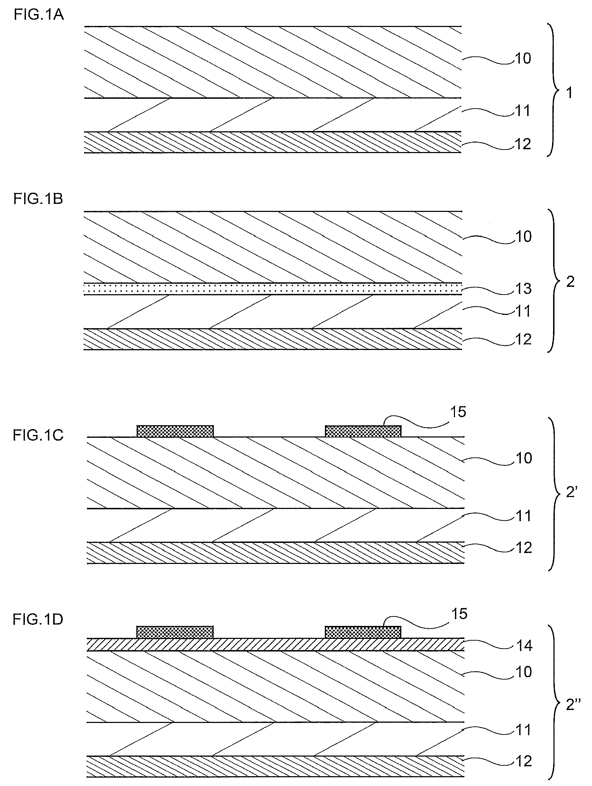

FIG. 1A to 1D are diagrams respectively provided to explain the configuration of an adhesive sheet for a tire.

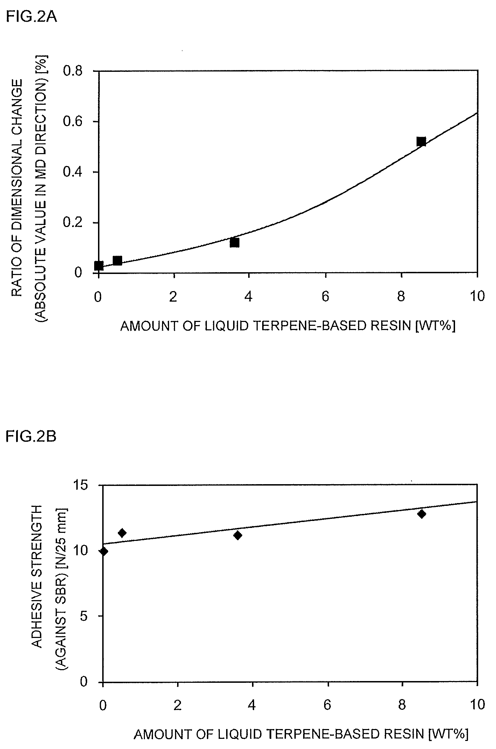

FIG. 2A is a diagram provided to explain the relationship between the amount of a liquid terpene and the ratio of dimensional change (MD direction); and FIG. 2B is a diagram provided to explain the relationship between the amount of a liquid terpene and the adhesive strength to a SBR plate at 23°C and 50%RH.

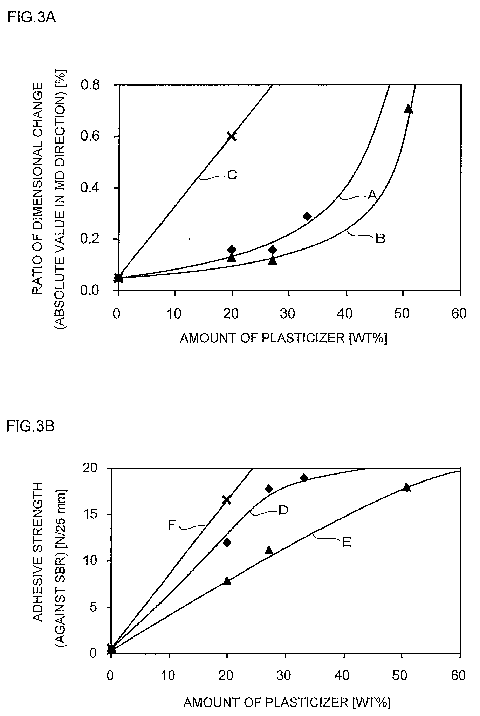

FIG. 3A is a diagram provided to explain the relationship between the amount of a plasticizer and the ratio of dimensional change (MD direction); and FIG. 3B is a diagram provided to explain the relationship between the amount of a plasticizer and the adhesive strength to a SBR plate at 23°C and 50%RH.
FIG. 4A is a photograph showing that when an adhesive sheet corresponding to Comparative Example 1 had been stored for 30 days in an environment at 60°C, wrinkles were generated; and FIG. 4B and 4C are photographs showing that dimensional changes occurred in adhesive sheets before and after storage.

### BEST MODES FOR CARRYING OUT THE INVENTION

### [First embodiment]

An embodiment of the invention relates to an adhesive sheet for a tire, the adhesive sheet including a substrate and an adhesive layer which contains a hot melt type adhesive composition, and the adhesive sheet having a ratio of dimensional change in the MD direction measured for 7 days at 60°C according to JIS K 7133, of below ±0.6%, in which the substrate is a polyolefin-based resin film, the hot melt type adhesive composition includes the following components (A) to (C):
(A) a block copolymer: 15% to 40% by weight;
(B) plural tackifiers having different softening points: 30% to 70% by weight; and
(C) a liquid hydrocarbon-based plasticizer: 10% to 50% by weight, and
the number average molecular weight of the (C) liquid hydrocarbon-based plasticizer has a value within the range of 10,000 to 60,000.

Hereinafter, the first embodiment of the invention will be specifically explained with reference to the drawings.

### 1. Substrate

### (1) Kind

The kind of the substrate 10 that constitutes a portion of the adhesive sheet for a tire illustrated in FIG. 1A to 1D is characterized by being a polyolefin-based resin film.

The reason for this is that the adhesive sheet for a tire may be manufactured at lower cost.

However, as described above, in a case in which a polyolefin-based resin film is used as the substrate, there may occur significant dimensional change of the substrate caused by heating at the time of production, or by the passage of storage time, the passage of affixing time or the like, and wrinkles may occur in the adhesive sheet over time.

Thus, according to the invention, when the hot melt type adhesive composition that will be described below is incorporated into the adhesive layer, even in the case of using a polyolefin-based resin film as the substrate, the influence exerted by the hot melt type adhesive composition on the dimensional change of the substrate is reduced, and the ratio of dimensional change of the adhesive sheet may be suppressed.

Meanwhile, the kind of the polyolefin-based resin film is not particularly limited, and examples thereof include polypropylene and polyethylene. It is more preferable to use a polypropylene film. Furthermore, the polyolefin-based resin film may be a non-stretched polypropylene film, or may be a biaxially stretched polypropylene film.

Furthermore, it is preferable to use a polyolefin resin film which has a cavity therein, has surface unevenness on the surface, or contains fine particles therein.

For example, a white polypropylene film containing titanium oxide therein may be used.

Furthermore, in regard to the configuration of the substrate, as illustrated in FIG. 1B, the substrate is preferably a substrate 10 including a metal layer 13, for example, a vapor deposited aluminum layer.

This is because when a metal layer 13 is included between such a substrate 10 and the adhesive layer 11, the constituent components may be prevented from migrating from the adhesive layer to the substrate, and the ratio of dimensional change of the adhesive sheet may be further reduced.

Furthermore, blackening at the substrate surface, which is attributable to the migration of the constituent components of a tire, may be effectively prevented. More specifically, an amine-based aging inhibitor, an aromatic oil and the like, which are constituent components of the rubber material that constitute a tire, migrate to the substrate, and that migration may cause blackening of the substrate surface. However, the metal layer 13 is intended to block such migration.

Furthermore, although not shown in the diagram, it is also preferable to provide an easily bonding layer (coating layer) between the substrate and the adhesive layer in order to reduce the ratio of dimensional change of the adhesive sheet.

The kind of the relevant coating layer may be a urethane-based or polyester-based coating layer.

Furthermore, in regard to the configuration of the substrate, it is also preferable to provide a printed layer 15 illustrated in FIG. 1C, or as illustrated in FIG. 1D, to provide a colored layer 14 for making it easy to form a printed layer 15, or although not shown in the diagram, a recording layer for enabling recording such as thermal transfer recording or inkjet recording, or an information region such as magnetic recording, a bar code and a micro-semiconductor element, in a portion of the substrate 10.

### (2) Thickness

It is preferable to adjust the thickness of the substrate to a value within the range of 10 µm to 150 µm.

This is because if the thickness of such a substrate has a value of below 10 µm, handling may become difficult, wrinkles may occur at the time of affixing, or the substrate may be destroyed at the time of detachment.

On the other hand, it is because if the thickness of such a substrate is above 150 µm, as flexibility is decreased, the conformity to the tire as an adherend is decreased, and the adhesive sheet for a tire may be easily detached from the tire. Furthermore, it is more preferable to adjust the thickness of the substrate to a value within the range of 10 µm to 120 µm.

### 2. Adhesive layer

### (1) Kind

The kind of the adhesive that constitutes the adhesive layer is characterized by being a hot melt type adhesive composition.

This is because when a hot melt type adhesive composition is used, it is unnecessary to use a solvent or to dry the composition when the adhesive layer is laminated, and the production apparatus may be miniaturized, or the production time may be shortened.

### (2) Main component

The hot melt type adhesive composition that constitutes the adhesive layer is characterized by having adhesive strength to a tire having surface unevenness on the surface, and by including a hot melt type adhesive composition having the following composition.

That is, the invention is characterized in that the hot melt type adhesive composition includes:
(A) a block copolymer: 15% to 40% by weight;
(B) plural tackifiers having different softening points: 30% to 70% by weight; and
(C) a liquid hydrocarbon-based plasticizer: 10% to 50% by weight, and
the number average molecular weight of the (C) liquid hydrocarbon-based plasticizer has a value within the range of 10,000 to 60,000.

This is because when such a hot melt type adhesive composition is used, adjustment of the adhesive strength to the tire over a wide range from low temperature to high temperature is made easier.

More specifically, when a hot melt type adhesive composition is used in an adhesive sheet for a tire, even in the winter season with low outside air temperature, the adhesive sheet for a tire may be affixed with high accuracy with less lifting or peeling, even in a case in which a studless tire is used as an adherend. Furthermore, even in the summer season with high outside air temperature, there is no problem of lifting or peeling after affixing. Furthermore, when the adhesive layer is laminated, it is unnecessary to use a solvent or dry the composition, and the production apparatus may be miniaturized, or the production time may be shortened.

### (3) Component (A): block copolymer

Furthermore, examples of the block copolymer include ABA-type block copolymers such as a styrene-isobutylene-styrene block copolymer (SIBS), a styrene-butadiene-styrene block copolymer (SBS), and a styrene-isoprene-styrene block copolymer (SIS).

Here, an ABA-type block copolymer is a copolymerization product obtained by polymerizing two kinds of homopolymers of component A and component B as blocks, and if the component A is a resin component and the component B Is a rubber component, the ABA-type block copolymer has a structure in which both ends of the rubber component (component B) are restrained by domains of the resin component (component A).

Regarding such an ABA-type block copolymer, from the viewpoint that it is easy to impart tackiness and adjustment of the adhesive strength to the tire surface at a low temperature is further easier, it is more preferable to use a styrene-isoprene-styrene block copolymer (SIS).

For these synthetic rubber-based adhesives, the adhesive strength or retentivity may be adjusted by incorporating a tackifier, a plasticizer, additives, and the like.

Furthermore, the adhesive layer is characterized in that the amount of the block copolymer is adjusted to a value within the range of 15% to 40% by weight relative to the total amount of the hot melt type adhesive composition.

This is because if the amount of such a block copolymer has a value of below 15% by weight, the overall cohesive strength of the adhesive is decreased, and during the summer season with high outside air temperature, deterioration of characteristics may become noticeable, effusion (hereinafter, referred to as oozing) from the end faces of the adhesive sheet may occur, or glue-cutting at the time of punching processing may be deteriorated.

On the other hand, it is because if the amount of such a block copolymer is above 40% by weight, the adhesive strength to the tire is decreased, the adhesive sheet may not adhere strongly at the time of affixing to the tire, and particularly, affixing in a low temperature environment may become difficult. Furthermore, if the amount of such a block copolymer is above 40% by weight, the overall melt viscosity of the adhesive increases, and there may be a problem that the suitability for hot melt coating may be deteriorated.

Therefore, it is more preferable to adjust the amount of the block copolymer to a value within the range of 18% to 30% by weight relative to the total amount of the hot melt type adhesive composition.

Furthermore, it is preferable to use an ABA-type triblock copolymer as the block copolymer and to also incorporate diblock copolymer as the AB-type block copolymer. That is, it is preferable to adjust the amount of the diblock copolymer to a value within the range of 30% to 80% by weight relative to 100% by weight of the block copolymers.

This is because if the amount of such a diblock copolymer has a value of below 30% by weight, an insufficient value of the adhesive strength to the tire may be obtained at a low temperature, and lifting or peeling from the tire may easily occur. On the other hand, it is because if the amount of such a diblock copolymer is above 80% by weight, the cohesive strength may be decreased, and oozing or adhesive residue after label peeling may easily occur.

Meanwhile, in a case in which the ABA-type block copolymer is a styrene-isoprene-styrene block copolymer (SIS), it is preferable for the adhesive layer to include a styrene-isoprene block copolymer (SI) of the same kind, as the AB-type block copolymer.

Furthermore, in regard to the block copolymers, it is preferable to adjust the content of the polystyrene region in 100% by weight of the block copolymers to a value of 20% by weight or less.

This is because if the content of the polystyrene region is above 20% by weight, since the amount of isoprene that contributes relatively and significantly to the manifestation of adhesiveness is insufficient, the adhesive strength to the tire is decreased, and at the time of affixing to the tire, the adhesive sheet may not adhere strongly, and particularly, affixing in a low temperature environment may become difficult. Furthermore, the overall melt viscosity of the adhesive increases, and there may be a problem that the suitability for hot melt coating is decreased.

However, if the content of the polystyrene region is excessively decreased, the cohesive strength may be decreased, and oozing or adhesive residue after label peeling may easily occur. Therefore, it is more preferable to adjust the content of the polystyrene region in 100% by weight of the block copolymer to a value within the range of 10% to 20% by weight.

### (4) Tackifier

### (i) Kind

On the occasion of configuring the hot melt type adhesive composition, the adhesive composition is characterized in that plural tackifiers having different softening points are added thereto.

Here, the kind of the tackifier is not particularly limited, and at least one kind of rosin-based resins such as polymerized rosin, a polymerized rosin ester and a rosin derivative; a polyterpene resin, an aromatic modified terpene resin and hydride thereof, a terpene-phenolic resin, a coumarone-indene resin, an aliphatic petroleum resin, an aromatic petroleum resin and hydride thereof, an aliphatic/aromatic copolymer petroleum resin, and an oligomer of styrene or substituted styrene, may be mentioned as an example.

Furthermore, in relation to the plural tackifiers having different softening points, it is because when plural tackifiers are included, a tackifying resin having a relatively high softening point is effective for manifesting adhesiveness at a high temperature; however, the adhesiveness is impaired at a low temperature. Therefore, by using a tackifying resin having a relatively high softening point in combination with a tackifier having a relatively low softening point, the adhesive sheet may cope with a wide temperature range from a low temperature region to a high temperature region. That is, it is because plural tackifiers having different softening points are respectively compatibilized selectively with the rubber component and the resin component in the block copolymer.

### (ii) Preferable tackifier 1

Furthermore, it is preferable that the plural tackifiers having different softening points include a terpene-based resin that is liquid at room temperature, and the amount of the relevant terpene-based resin that is liquid at room temperature has a value within the range of 0.5% to 20% by weight relative to the total amount of the plural tackifiers.

This is because when a terpene-based resin that is liquid at room temperature is used, the adhesion characteristics over a wide range from low temperature to high temperature may be enhanced by adding a small amount of the terpene-based resin. In other words, it is because the adhesion characteristics to the tire may be enhanced while the influence on the substrate is suppressed.

Furthermore, when the amount of the terpene-based resin that is liquid at room temperature has a value of below 0.5% by weight relative to the total amount of the plural tackifiers, the adhesiveness to the tire may be excessively decreased. Furthermore, it is because when the amount of such a terpene-based tackifier that is liquid at room temperature has a value of above 20% by weight, the terpene-based tackifier is likely to migrate to the polyolefin-based resin film, which is the substrate, and dimensional change of the polyolefin-based resin film is accelerated, causing the ratio of dimensional change of the adhesive sheet to increase.

Therefore, it is more preferable to adjust the amount of the terpene-based resin that is liquid at room temperature, to a value within the range of 1% to 15% by weight, and even more preferably to a value within the range of 4% to 10% by weight, relative to the total amount of the plural tackifiers.

Here, the influence exerted by the amount of the terpene-based resin that is liquid at room temperature, on the adhesion characteristics or the ratio of dimensional change, will be explained using FIG. 2A and 2B.

That is, FIG. 2A shows a characteristic curve in which the horizontal axis represents the amount of the terpene-based resin that is liquid at room temperature, and the vertical axis represents the ratio of dimensional change in the MD direction. FIG. 2B shows a characteristic curve in which the horizontal axis represents the amount of the terpene-based resin that is liquid at room temperature, and the vertical axis represents the adhesive strength to a SBR plate at 23°C and 50%RH.

In FIG. 2A, the ratio of dimensional change in the MD direction increases with the increase in the amount of the liquid terpene-based resin. That is, it is understood that when the amount of the liquid terpene-based resin increases, since the terpene-based resin may migrate to the substrate side more easily, the dimensional change of the substrate further increases, and consequently, the ratio of dimensional change of the adhesive sheet is increased.

On the other hand, as illustrated in FIG. 2B, it is understood that relative to the increase in the amount of the liquid terpene-based resin, no significant change is observed in the adhesive strength to a SBR plate at 23°C and 50%RH.

That is, it is understood that addition of a liquid terpene-based resin as a tackifying resin contributes significantly to the promotion of the ratio of dimensional change of the polyolefin-based resin film, as explained above.

Meanwhile, the methods for measuring the adhesive strength and the ratio of dimensional change will be described in Examples.

### (iii) Preferable tackifier 2

Furthermore, it is preferable that the plural tackifiers having different softening points include a polymerized rosin ester having a softening point of 120°C or higher as measured according to JIS K 2207 (ring and ball type).

This is because when a polymerized rosin ester having a relatively high softening point is included, it is effective to manifest adhesiveness at a high temperature, and when the polymerized rosin ester is combined with other plural tackifiers, the adjustment of the adhesive strength to the tire, cohesive strength and attachability to a curved surface of the hot melt type adhesive composition is facilitated in a wide range of temperature.

Furthermore, it is preferable that the amount of the polymerized rosin ester is adjusted to a value within the range of 5% to 25% by weight relative to the total amount of the plural tackifiers.

This is because if the amount of such a polymerized rosin ester has a value of below 5% by weight, the evaluation of the adhesive strength to the tire at a high temperature and the attachability to a curved surface may be markedly deteriorated. Furthermore, it is because if the amount of such a polymerized rosin ester is above 25% by weight, the adhesive strength to the tire at a low temperature may be markedly decreased.

Therefore, it is more preferable to adjust the amount of the polymerized rosin ester to a value within the range of 10% to 25% by weight relative to the total amount of the plural tackifiers.

### (iv) Preferable tackifier 3

Furthermore, it is preferable that the plural tackifiers having different softening points further include at least one selected from an aliphatic petroleum resin, an aromatic petroleum resin, and a mixture thereof, all of which have softening points of 60°C to 100°C as measured according to JIS K 2207 (ring and ball type).

This is because when at least one selected from an aliphatic petroleum resin, an aromatic petroleum resin and a mixture thereof, all of which have softening points of 60°C to 100°C, are used in combination, adhesiveness in a wide range from a low temperature region to normal temperature region is specifically increased.

Meanwhile, regarding the at least one selected from an aliphatic petroleum resin, an aromatic petroleum resin and a mixture thereof, it is preferable that the resin has a softening point lower by 30°C or above that of the tackifier having a softening point of 120°C or higher. This is because when such a tackifier is used, the adhesiveness in a wide range from a low temperature region to normal temperature region is further increased.

### (v) Amount

Furthermore, the adhesive sheet is characterized in that the total amount of the plural tackifiers having different softening points is adjusted to a value within the range of 30% to 70% by weight relative to the total amount of the hot melt type adhesive composition.

This is because if the total amount of such tackifiers has a value of below 30% by weight, the adhesive strength becomes insufficient, and when the adhesive sheet is affixed to a tire, the adhesive sheet may not strongly adhere to the tire. On the other hand, it is because if the total amount of such tackifiers is above 70% by weight, oozing or glue-cutting at the time of label punching processing may be deteriorated.

Furthermore, it is more preferable that the total amount of the tackifiers is adjusted to a value within the range of 40% to 65% by weight relative to the total amount of the hot melt type adhesive composition.

### (5) Liquid hydrocarbon-based plasticizer

On the occasion of configuring the hot melt type adhesive composition, the hot melt type adhesive composition is characterized in that a liquid hydrocarbon-based plasticizer having a number average molecular weight value within the range of 10,000 to 60,000 is added thereto.

This is because if the number average molecular weight has a value of below 10,000, the plasticizer migrates to the substrate, the dimensional change of the substrate increases, and the ratio of dimensional change of the adhesive sheet may increase with the passage of storage time or the like. Furthermore, it is because if the number average molecular weight has a value of above 60,000, the (A) block copolymer and the like may not be sufficiently plasticized.

Furthermore, it is more preferable to adjust the number average molecular weight of the liquid hydrocarbon-based plasticizer to a value within the range of 20,000 to 50,000, and even more preferably to a value within the range of 25,000 to 48,000.

Furthermore, the kind of the liquid hydrocarbon-based plasticizer is not particularly limited, and examples thereof include a liquid isoprene polymer, a liquid butadiene polymer, a liquid butadiene-isoprene copolymer, liquid polybutene, and liquid polyisobutylene. However, a liquid isoprene polymer is more preferred.

This is because when the liquid hydrocarbon-based plasticizer is a liquid isoprene polymer, high compatibility with the block copolymers is obtained, and a high plasticizing effect is obtained.

Here, examples of the liquid isoprene polymer include an isoprene homopolymer, an isoprene copolymer, a functional group-containing isoprene copolymer, a photocurable isoprene copolymer, and a hydrogenated isoprene copolymer.

Furthermore, it is preferable that the glass transition point of the isoprene polymer has a value within the range of -50°C to -100°C.

This is because when the glass transition point of the isoprene polymer has a value higher than -50°C, the plasticizing effect may be excessively decreased. Furthermore, it is because if the glass transition point has a value lower than -100°C, the kind of usable isoprene polymer may be excessively limited.

Therefore, it is more preferable that the glass transition point of the isoprene polymer is within the range of -60°C to -95°C.

Furthermore, the invention is characterized in that the amount of the liquid hydrocarbon-based plasticizer is adjusted to a value within the range of 10% to 50% by weight relative to the total amount of the hot melt type adhesive composition.

This is because if the amount of such a plasticizer has a value of below 10% by weight, plasticization may not occur sufficiently, the adhesive strength to the tire is insufficient, and the adhesive sheet may not strongly adhere when the adhesive sheet is affixed to the tire. On the other hand, it is because if the amount of such a plasticizer is above 50% by weight, migration of the plasticizer to the substrate becomes non-negligible, and the ratio of dimensional change of the adhesive sheet may become large. Furthermore, it is because oozing or the glue-cutting at the time of label punching processing may be deteriorated.

Therefore, it is more preferable to adjust the amount of the liquid hydrocarbon-based plasticizer to a value within the range of 15% to 40% by weight relative to the total amount of the hot melt type adhesive composition.

Here, the relationship between the amount of the kind of the plasticizer and the ratio of dimensional change in the MD direction and the relationship between the amount and the adhesion characteristics will be respectively explained using FIG. 3A and 3B.

That is, FIG. 3A shows characteristic curves A to C, in which the horizontal axis represents the amount of the plasticizer and the vertical axis represents the ratio of dimensional change in the MD direction. Furthermore, the characteristic curve A is a characteristic curve in the case of using "LIR-30" as the plasticizer (symbol ◆); the characteristic curve B is a characteristic curve in the case of using "LIR-390" (symbol ▲); and the characteristic curve C is a characteristic curve in the case of using process oil "P100" (symbol X).

Furthermore, FIG. 3B shows characteristic curves D to F, in which the horizontal axis represents the amount of the plasticizer and the vertical axis represents the adhesion characteristics to a SBR plate at 23°C and 50%RH. Furthermore, the characteristic curve D is a characteristic curve in the case of using "LIR-30" as the plasticizer (symbol ◆); the characteristic curve E is a characteristic curve in the case of using "LIR-390" (symbol ▲); and the characteristic curve F is a characteristic curve in the case of using process oil "P100" (symbol X).

It is understood from the characteristic curves A to C that as compared to the case of using a liquid hydrocarbon-based plasticizer having a predetermined molecular weight, when a process oil is used, the ratio of dimensional change of the substrate markedly increases with the increase in the amount of the plasticizer.

On the other hand, it is understood from the characteristic curves D to F that whatever plasticizer is used, the adhesive strength to a SBR plate at 23°C and 50%RH increases with the increase in the amount of the plasticizer.

That is, when a liquid hydrocarbon-based plasticizer having a predetermined molecular weight is used, the adhesive strength may be increased while migration to the substrate is suppressed. However, it is understood that when a process oil is used, the process oil contributes to the increase in the adhesive strength, but migration to the substrate is noticeable, and the ratio of dimensional change of the adhesive sheet becomes large.

Meanwhile, the methods for measuring the ratio of dimensional change and the adhesion characteristics are described in Examples.

### (6) Additives

It is also preferable that various additives, for example, conventionally known additives such as a filler, inorganic particles, organic particles, a weight reducing agent, a fluidizing agent, a pigment, a dye, a colorant, an oxidation inhibitor, an ultraviolet absorber, and a photostabilizer, are added to the hot melt type adhesive composition of the invention, if necessary.

### 3. Release sheet

Furthermore, the adhesive sheet for a tire of the invention may be provided with a release sheet 12 for the purpose of protecting the adhesive layer or the like. The release sheet 12 is not particularly limited, and for example, a resin film formed from a resin such as a polyester such as polyethylene terephthalate, or a polyolefin such as polypropylene or polyethylene, or a film obtained by release-treating such a resin film with a release agent such as a silicone resin-based agent, a fluororesin-based agent, or a long-chain alkyl group-containing carbamate agent; or a release paper obtained by release-treating paper such as glassine paper, clay-coated paper, or a laminated paper with the release agent described above, may be used.

### 4. Ratio of dimensional change (MD direction)

Furthermore, the invention is characterized in that the ratio of dimensional change of the adhesive sheet for a tire in the MD direction (transport direction) measured for 7 days at 60°C according to JIS K 7133 has a value of below ±0.6%.

This is because if the ratio of dimensional change in the MD direction has a value of ±0.6% or more, as the dimensional change of the substrate increases, wrinkles may easily occur with the passage of storage time or the like.

Meanwhile, when the MD direction and the TD direction of an adhesive sheet are compared, the adhesive sheet tends to be pulled relatively strongly in the MD direction during the production operation. Thus, the occurrence of wrinkles may be effectively prevented by defining the ratio of dimensional change in the MD direction more strictly.

Therefore, it is more preferable to adjust the ratio of dimensional change in the MD direction of the adhesive sheet for a tire for a predetermined period of time to a value within the range of ±0.5% or less.

Furthermore, the method for measuring the ratio of dimensional change is described in Examples.

### 5. Ratio of dimensional change (TD direction)

Furthermore, it is preferable that the ratio of dimensional change in the TD direction (wide direction) of the adhesive sheet for a tire measured for 7 days at 60°C according to JIS K 7133 has a value within the range of ±1.0% or less.

This is because if the ratio of dimensional change in the TD direction has a value of above ±1.0%, as the dimensional change of the substrate increases, wrinkles may occur more easily with the passage of storage time or the like.

Furthermore, not only the MD direction, but when the ratio of dimensional change in the TD direction is also defined, the ratio of dimensional change of the adhesive sheet may be defined more strictly. Therefore, the occurrence of wrinkles with the passage of storage time or the like may be more effectively prevented.

Therefore, it is more preferable to adjust the ratio of dimensional change in the TD direction of the adhesive sheet for a tire during a predetermined time period to a value within the range of ±0.9% or less.

Meanwhile, the method for measuring the ratio of dimensional change is described in Examples.

### [Second embodiment]

A second embodiment relates to a method for manufacturing an adhesive sheet for a tire including a substrate and an adhesive layer, the method including the following steps (1) to (3):
(1) a step of preparing a hot melt type adhesive composition including the following components (A) to (C):
   (A) a block copolymer: 15% to 40% by weight;
   (B) plural tackifiers having different softening points: 30% to 70% by weight; and
   (C) a liquid hydrocarbon-based plasticizer having a number average molecular weight value within the range of 10,000 to 60,000: 10% to 50% by weight,
(2) a step of preparing a polyolefin-based resin film as a substrate, and
(3) a step of applying the hot melt type adhesive composition on the substrate, and thereby forming an adhesive sheet for a tire, for which the ratio of dimensional change in the MD direction measured for 7 days at 60°C according to JIS K 7133 is below ±0.6%.

In the following, since the matters related to the substrate and the adhesive layer overlap with those according to the first embodiment, the present embodiment will be explained mainly based on the items related to the method for manufacturing an adhesive sheet for a tire.

### (1) Step 1: Step of preparing adhesive layer

Step (1) is a step of preparing a hot melt type adhesive composition including the following components (A) to (C):
(A) a block copolymer: 15% to 40% by weight
(B) plural tackifiers having different softening points: 30% to 70% by weight
(C) a liquid hydrocarbon-based plasticizer having a number average molecular weight value within the range of 10,000 to 60,000: 10% to 50% by weight

Meanwhile, the configuration of the adhesive and the like is as described above and will not be repeated here.

### (2) Step 2: Step of preparing substrate

Step (2) is a step of preparing a polyolefin-based resin film as a substrate.

Meanwhile, the configuration of the predetermined substrate is as described above and will not be repeated here.

(3) Step 3: Step of forming adhesive sheet for tire Step (3) is a step of forming an adhesive layer on the substrate and thus forming an adhesive sheet for a tire.

Here, the method for forming an adhesive layer on the substrate is not particularly limited; however, for example, it is preferable to employ a transfer coating method of applying the hot melt type adhesive composition on a release sheet, cooling the adhesive composition as necessary, and then bonding the adhesive composition with a surface substrate.

Furthermore, it is also preferable to employ a direct coating method of first directly applying a hot melt type adhesive composition on a surface substrate, cooling the adhesive composition as necessary, and bonding the adhesive composition with a release sheet.

Furthermore, the application apparatus for the hot melt type adhesive composition is not particularly limited, and the hot melt type adhesive composition may be applied using a conventionally existing coating machine such as a roll coater, a knife coater, a bar coater, a die coater, an air knife coater, a gravure coater, a vario gravure coater, or a curtain coater.

Furthermore, in regard to the amount of coating of the hot melt type adhesive composition, it is preferable to adjust the amount of coating to a value within the range of 20 g/m² to 120 g/m² as the weight per unit area. This is because if such an amount of coating has a value of below 20 g/m², the adhesiveness to the tire may become insufficient, and if the amount of coating is above 120 g/m², this amount may cause oozing, and the possibility of causing inconveniences at the time of printing and cutting processing may increase.

Furthermore, it is more preferable to adjust the amount of coating of the hot melt type adhesive composition to a value within the range of 30 g/m² to 80 g/m².

Furthermore, in a case in which an adhesive composition containing a block copolymer as a main component is used, due to the nature of the composition, it is possible to directly mold the adhesive composition and use it as a hot melt adhesive composition. Therefore, the adhesive layer may be produced into an adhesive layer by first thermally melting, using a known applicator, a hot melt type adhesive composition that has been molded to a predetermined shape, subsequently applying the adhesive composition in a molten state, and solidifying the molten adhesive composition.

In this regard, since many of adhesive sheets for tires are conventionally used at high amounts of coating, for example, as products having a thickness of 60 g/m² or the like, there is a risk that in the case of solvent type adhesives, the drying process may become a rate-limiting factor for the speed of production. On the contrary, when a hot melt type adhesive composition that does not require a drying process is used and applied, the coating speed increases dramatically, and reduction of production-related cost may also be attempted. Furthermore, when a hot melt type adhesive composition is used, since a solvent is not at all used, or the amount thereof is reduced as much as possible, it is highly advantageous not only from the viewpoint of economic efficiency but also from the viewpoint of environmental protection.

Furthermore, the adhesive sheet for a tire of the invention may also be used as an adhesive label by punching processing some layers or all the layers of the adhesive sheet into a label shape.

Also, in order to adhere the adhesive sheet with a labeler, a form in which only the substrate and the adhesive layer are punched except for the release sheet, and the substrate and adhesive layer in the periphery are removed in advance, is generally used.

### [EXAMPLES]

Hereinafter, the invention will be explained in more detail by way of Examples. However, the following descriptions are only for illustrative purposes, and the invention is not intended to be limited by these descriptions.

### [Example 1]

### 1. Step of manufacturing adhesive sheet for tire (1) Step of preparing adhesive layer

18.9% by weight of "QUINTAC 3520" (SIS block copolymer, amount of diblocks: 78% by weight, content of styrene region: 15% by weight, manufactured by Zeon Corporation); 38.7% by weight of "QUINTONE N180" (softening point: 80°C, aliphatic/aromatic copolymerized petroleum resin, manufactured by Zeon Corporation), 10.8% by weight of "PENSEL D-160" (softening point: 160°C, polymerized rosin ester, manufactured by ARAKAWA CHEMICAL INDUSTRIES, LTD.; hereinafter, may be referred to as "D-160"), and 3.6% by weight of "YS RESIN LP" (liquid terpene resin, manufactured by YASUHARA CHEMICAL CO., LTD.) as tackifiers; 27.0% by weight of "LIR-30" (liquid isoprene resin, manufactured by KURARAY CO., LTD., number average molecular weight: 28,000) as a plasticizer; and 0.9% by weight of "IRGANOX HP2251" (hindered phenol-based oxidation inhibitor, manufactured by BASF Japan, Ltd.) as an oxidation inhibitor were blended, and the mixture was uniformly mixed. Thus, a hot melt type adhesive composition was prepared.

### (2) Step of preparing substrate

Subsequently, a white polypropylene film (manufactured by Innovia Films, Ltd.) having a thickness of 59 µm was prepared as a substrate.

### (3) Step of forming adhesive sheet for tire

Subsequently, the hot melt type adhesive composition described above was melted under the conditions of 140°C using a die coater, and the adhesive composition was applied on a release sheet (silicone resin/polyethylene film/woodfree paper, "SP-8 EA Ivory", manufactured by LINTEC Corporation), such that the amount of coating was 40 g/m². The release sheet was bonded with the substrate described above, and thus a release sheet-attached adhesive sheet for a tire was manufactured.

### 2. Evaluation

### (1) Evaluation of ratio of dimensional change (MD direction and TD direction)

Regarding the ratio of dimensional change of the adhesive sheet thus obtained, the ratios of change of dimension (+: elongation, -: shrinkage) in the MD (machine direction) and TD (transverse direction) were measured according to JIS K 7133, before and after an acceleration test for 7 days in an environment at 60°C. The results thus obtained are presented in Table 1.

### (2) Evaluation of peeling strength

Small specimens which measured 50 mm in width and 100 mm in length were cut out from an adhesive sheet for a tire thus obtained, into a die cut roll, and the small specimens were respectively affixed to a studless tire (manufactured by Bridgestone Corporation, "BLIZZAK REV02") in environments at 0°C and 40°C. After the specimens were left to stand untouched for 30 minutes in the environments at 0°C and 40°C, the specimens were peeled by pulling by hand, and the peeling strength was measured. The peeling strength of the adhesive sheet for a tire was evaluated according to the following criteria.

The results thus obtained are presented in Table 1.
⊙: The adhesive sheet has sufficient adhesive strength.
○: The adhesive sheet has slightly poor adhesive strength, but the adhesive strength is at a level without any problem for practical use.
Δ: The adhesive sheet has weak adhesive strength, and is easily peeled off.
×: The adhesive sheet has almost no adhesive strength.

### (3) Evaluation of oozing nature

Small specimens which measured 100 mm in width and 100 mm in length were cut out from an adhesive sheet for a tire thus obtained, and the adhesive was removed by inserting notches such that three substrate sections having a size of 100 mm in length and 20 mm in width were left at an interval of 10 mm. Subsequently, the adhesive sheet was interposed between stainless steel plates and was pressed for 24 hours under the conditions of 40°C and 3.3 MPa. Squeeze-out of the adhesive was analyzed, and the oozing nature of the adhesive sheet for a tire was evaluated according to the following criteria. The results thus obtained are presented in Table 1.
⊙: The adhesive does not ooze at all.
○: The adhesive slightly oozes but to a level without any problem for practical use.
×: Since the adhesive easily oozes, there is a concern about ooze of the adhesive at the time of storage in rolls.

### (4) Adhesive strength

An adhesive sheet for a tire thus obtained was peeled off 30 minutes after being affixed, according to JIS Z 0237 (ISO 29862 2007) using an Instron type tensile tester at a tensile rate of 300 mm/min at an angle of 180°, and the load was measured. The tensile load value obtainable under the environment conditions of 23°C and 50%RH was measured as the adhesive strength (N/25 mm).

Meanwhile, a SBR plate (manufactured by IRUMAGAWA RUBBER CO., LTD.) having a thickness of 2 mm was used as the adherend at the time of measuring the adhesive strength. The results thus obtained are presented in Table 1.

### [Example 2 to Example 7]

In Example 2, the evaluations were carried out in the same manner as in Example 1, except that "LIR-30" as the plasticizer was used in an amount of 19.8% by weight.

In Example 3, evaluations were carried out in the same manner as in Example 1, except that 19.8% by weight of "LIR-390" (liquid isoprene resin, manufactured by KURARAY CO., LTD., number average molecular weight: 48,000) was used as the plasticizer.

In Example 4, evaluations were carried out in the same manner as in Example 1, except that 19.8% by weight of "LIR-403" (liquid isoprene resin, manufactured by KURARAY CO., LTD., number average molecular weight: 34,000) was used as the plasticizer. The results thus obtained respectively are presented in Table 1.

In Example 5, evaluations were carried out in the same manner as in Example 1, except that "LIR-30" as the plasticizer was used in an amount of 33.1% by weight.

Furthermore, in Example 6, evaluations were carried out in the same manner as in Example 1, except that 19.8% by weight of "LIR-310" (liquid isoprene resin, manufactured by KURARAY CO., LTD., number average molecular weight: 32,000) was used as the plasticizer.

Furthermore, in Example 7, evaluations were carried out in the same manner as in Example 1, except that 33.1% by weight of "LIR-403" was used as the plasticizer. The results thus obtained are presented in Table 1.

### [Example 8]

In Example 8, evaluations were carried out in the same manner as in Example 1, except that 18.9% by weight of "KRATON D1113" (SIS, amount of diblocks: 55% by weight, and content of styrene region: 16% by weight, manufactured by Kraton Polymers Japan, Ltd.; hereinafter, may be referred to as "D-1113") as the block copolymer and 27.0% by weight of "LIR-390" as the plasticizer were used instead of "QUINTAC 3520" as the block copolymer and "LIR-30" as the plasticizer. The results thus obtained are presented in Table 1.

### [Example 9]

In Example 9, evaluations were carried out in the same manner as in Example 8, except that 38.7% by weight of "T-480X" (softening point: 80°C, aliphatic/aromatic copolymer petroleum resin, manufactured by Mitsui Chemicals, Inc.) was used instead of "QUINTONE N180" as a tackifier. The results thus obtained are presented in Table 1.

### [Example 10]

In Example 10, evaluations were carried out in the same manner as in Example 8, except that "YS RESIN LP" as a tackifying resin was not incorporated. The results thus obtained are presented in Table 1.

### [Example 11]

In Example 11, evaluations were carried out in the same manner as in Example 8, except that "YS RESIN LP" as a tackifying resin was used in an amount of 0.5% by weight. The results thus obtained are presented in Table 1.

### [Example 12]

In Example 12, evaluations were carried out in the same manner as in Example 8, except that "YS RESIN LP" as a tackifying resin was used in an amount of 8.5% by weight. The results thus obtained are presented in Table 1.

### [Example 13]

In Example 13, evaluations were carried out in the same manner as in Example 3, except that 3.6% by weight of "YS RESIN PX-100" (liquid terpene resin, manufactured by YASUHARA CHEMICAL CO., LTD.) was used instead of "YS RESIN LP" as a tackifying resin. The results thus obtained are presented in Table 1.

### [Example 14 and Example 15]

In Example 14, evaluations were carried out in the same manner as in Example 8, except that a white polypropylene film having a vapor deposited aluminum layer on the surface of the substrate, which was brought into contact with the adhesive layer, was used as the substrate instead of the white polypropylene film.

Furthermore, in Example 15, evaluations were carried out in the same manner as in Example 8, except that a white polypropylene film having an acrylic resin-based coating layer (thickness: 1 µm) on the surface of the substrate, which was brought into contact with the adhesive layer, was used as the substrate instead of the white polypropylene film. The results are respectively presented in Table 1.

### [Comparative Example 1 and Comparative Example 2]

In Comparative Example 1, evaluations were carried out in the same manner as in Example 1, except that 19.8% by weight of "FUKKOL PROCESS OIL P-100" (manufactured by Fuji Kosan Co., Ltd., number average molecular weight: 85) was used as a plasticizer.

Furthermore, in Comparative Example 2, evaluations were carried out in the same manner as in Example 1, except that no plasticizer was used. The results thus obtained are respectively presented in Table 1.

### [Comparative Example 3 and Comparative Example 4]

In Comparative Example 3, evaluations were carried out in the same manner as in Example 3, except that only 50.6% by weight of "QUINTONE N180" was used as a tackifying resin.

Furthermore, in Comparative Example 4, evaluations were carried out in the same manner as in Example 1, except that 23.0% by weight of "QUINTONE N180", 6.4% by weight of "D-160", and 2.2% by weight of "YS RESIN LP" were used as tackifying resins, and 50.7% by weight of "LIR-390" as a liquid hydrocarbon-based plasticizer was used. The results thus obtained are respectively presented in Table 1.

Meanwhile, in Table 1, the mixing proportions of the respective components are indicated in percent (%) by weight.

As a result, in the Examples of the invention, the ratio of dimensional change in the MD direction had values within the range of below ±0.6%, and the occurrence of wrinkles was reduced. Furthermore, suitable adhesion characteristics were obtained for the tire surface over a wide range from low temperature to high temperature.

On the other hand, in Comparative Example 1, since a low molecular weight process oil was used as a plasticizer, the adhesion characteristics were suitable; however, migration of the plasticizer to the substrate occurred noticeably, and particularly the ratio of dimensional change in the TD direction was significant.

Furthermore, in Comparative Example 2 in which no plasticizer was incorporated, since the migration to the substrate occurred to a less extent, the ratio of dimensional change was decreased; however, a plasticizing effect was not obtained, and the adhesion characteristics became markedly poor.

Also, in Comparative Example 3 in which only a petroleum-based tackifier was used as the tackifying resin, peeling strength at 40°C was not obtained.

Furthermore, in Comparative Example 4 in which the (C) liquid hydrocarbon-based plasticizer was incorporated in excess, the ratios of heated dimensional change in both the longitudinal direction and the horizontal direction were large, and the adhesive sheet readily oozed from the sheet.

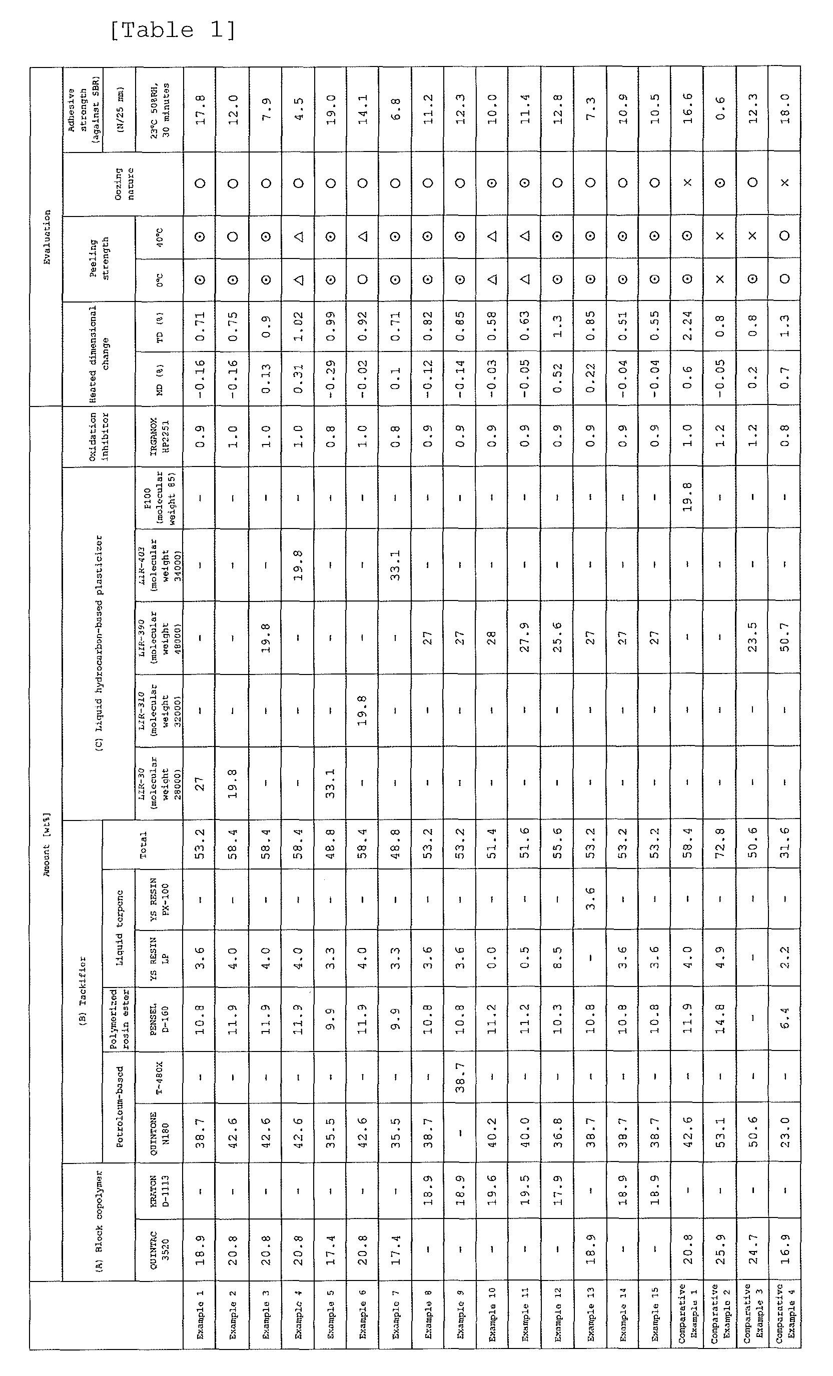

### INDUSTRIAL APPLICABILITY

According to the adhesive sheet for a tire and the method for manufacturing an adhesive sheet for a tire of the invention, even in a case in which a polyolefin-based resin film is used as a substrate, acceleration of dimensional change in the substrate can be prevented by using a particular hot melt type adhesive composition for the adhesive layer. As a result, the occurrence of wrinkles with the passage of storage time or the like may be suppressed.

Furthermore, when the adhesive sheet for a tire of the invention is used, the adhesive sheet may be strongly affixed even to a poorly adhesive studless tire having surface unevenness, over a wide range from low temperature to high temperature. Also, the adhesive sheet can be suitably applied not only to studless tires but also to tires for automobiles, aircrafts, bicycles and trucks, and other various tires.

Furthermore, the adhesive sheet for a tire of the invention may also be suitably applied to various rubber products other than tires, and are expected to exhibit effects that are similar to the effects of the invention.

### EXPLANATIONS OF LETTERS OR NUMERALS

- 10: 1,2,2',2" :: adhesive sheet for tire substrate
- 11:: adhesive layer
- 12:: release sheet
- 13:: metal layer (vapor deposited aluminum layer)
- 14:: colored layer
- 15:: printed layer
- 20:: adhesive sheet
- 30:: wrinkles
- 40:: dimensional change of adhesive sheet

## Claims

1. An adhesive sheet for a tire, the adhesive sheet comprising a substrate and an adhesive layer, the adhesive layer containing a hot melt type adhesive composition,
wherein the ratio of dimensional change in the MD direction of the adhesive sheet for a tire measured for 7 days at 60°C according to JIS K 7133 has a value of below ±0.6%,
the substrate is a polyolefin-based resin film,
the hot melt type adhesive composition includes the following components (A) to (C):
(A) 15% to 40% by weight of a block copolymer;
(B) 30% to 70% by weight of plural tackifiers having different softening points; and
(C) 10% to 50% by weight of a liquid hydrocarbon-based plasticizer, and
the number average molecular weight of the (C) liquid hydrocarbon-based plasticizer has a value within the range of 10,000 to 60,000.

2. The adhesive sheet for a tire according to claim 1, wherein the ratio of dimensional change in the TD direction of the adhesive sheet for a tire measured for 7 days at 60°C according to JIS K 7133 has a value within the range of ±1.0% or less.

3. The adhesive sheet for a tire according to claim 1 or 2, wherein the (B) plural tackifiers having different softening points include a terpene-based resin that is liquid at room temperature, and the amount of the tackifier that is liquid at room temperature has a value within the range of 0.5% to 20% by weight relative to the total amount of the plural tackifiers.

4. The adhesive sheet for a tire according to any one of claims 1 to 3, wherein the (B) plural tackifiers having different softening points constitute a combination of at least one selected from an aliphatic petroleum resin, an aromatic petroleum resin and a mixture thereof, a polymerized rosin ester, and the terpene-based resin that is liquid at room temperature.

5. The adhesive sheet for a tire according to any one of claims 1 to 4, wherein the (C) liquid hydrocarbon-based plasticizer is an isoprene-based plasticizer, and the glass transition point of the isoprene-based plasticizer has a value within the range of -50°C to -100°C.

6. The adhesive sheet for a tire according to any one of claims 1 to 5, wherein the (A) block copolymer is a mixture of a styrene-isoprene-styrene block copolymer as an ABA-type block copolymer, and a styrene-isoprene block copolymer as an AB-type block copolymer, and the amount of the AB-type block copolymer is adjusted to a value of 30% to 80% by weight relative to the total amount of the block copolymers.

7. The adhesive sheet for a tire according to claim 6, wherein the content of the polystyrene region in 100% by weight of the block copolymers is adjusted to a value of 20% by weight or less.

8. The adhesive sheet for a tire according to any one of claims 1 to 7, wherein the substrate is a white polypropylene film containing a titanium oxide.

9. The adhesive sheet for a tire according to any one of claims 1 to 8, comprising a metal layer between the substrate and the adhesive layer.

10. A method for manufacturing an adhesive sheet for a tire, which includes a substrate and an adhesive layer, the method comprising the following steps (1) to (3):
(1) a step of preparing a hot melt type adhesive composition including the following components (A) to (C):
(A) 15% to 40% by weight of a block copolymer;
(B) 30% to 70% by weight of plural tackifiers having different softening points; and
(C) 10% to 50% by weight of a liquid hydrocarbon-based plasticizer having a number average molecular weight value within the range of 10,000 to 60,000,
(2) a step of preparing a polyolefin-based resin film as the substrate, and
(3) a step of applying the hot melt type adhesive composition on the substrate, and thereby forming an adhesive sheet for a tire, for which the ratio of dimensional change in the MD direction measured for 7 days at 60°C according to JIS K 7133 has a value of below ±0.6%.
